# EUROPEAN PATENT APPLICATION

(11) **EP 4 757 123 A1**
(43) Date of publication of application: **10.06.2026**
(21) Application number: 25220724.6
(22) Date of filing: 04.12.2025
(51) Int. Cl.: H02K 1/02, H02K 1/276, H02K 1/27, H02K 1/16, H02K 21/14

(54) **MOTOR**

(30) Priority: 04.12.2024 JP 2024211207; 03.12.2025 JP 2025225454
(71) Applicant: SHINSHU UNIVERSITY, Matsumoto City, Nagano, 390-8621 (JP); SANYO DENKI CO., LTD., Tokyo 170-8451 (JP)
(72) Inventor: MIZUNO, Tsutomu, Nagano, 380-8553 (JP); HORIUCHI, Manabu, Tokyo, 170-8451 (JP)
(74) Representative: Mathys & Squire

(57) **Abstract**

Provided is a motor (100) including: a stator (10) including a stator core (11) having a tooth, and a winding wound around the tooth; and a rotor (20) including a permanent magnet (23), in which at least a part of a portion, in which the permanent magnet embedded in the rotor faces the stator, of the rotor is provided with a non-magnetic portion.

Fig. 1

## Description

### BACKGROUND

### 1. Technical Field

The present disclosure relates to a motor.

### 2. Related Art

Most of motors are used for compressors or fans and at a constant rotational speed. When motors are used for various purposes in recent years, rotational speeds thereof are controlled. For example, drive motors for hybrid vehicles are used in various operating ranges from low to high speed. Moreover, motors for servo systems representative of motors for factory automation (FA) are also driven at high acceleration/deceleration and at high speed to quickly follow a position command. Hence, motors with increased output or speed are often used for high-end applications. The market of these motors continues expanding.

### SUMMARY

A motor according to the present disclosure includes: a stator including a stator core having a tooth, and a winding wound around the tooth; and a rotor including a permanent magnet, in which at least a part of a portion, in which the permanent magnet embedded in the rotor faces the stator, of the rotor is provided with a non-magnetic portion.

### BRIEF DESCRIPTION OF DRAWINGS

Fig. 1 is a diagram illustrating a motor 100 according to a first embodiment of the present disclosure;
Fig. 2 is a graph illustrating B-H curves of a general soft magnetic material and non-linear soft magnetic material;
Fig. 3 illustrates an efficiency map of the motor 100 according to the first embodiment illustrated in Fig. 1;
Fig. 4 is a diagram illustrating a motor 200 according to Reference Example 1;
Fig. 5 is an efficiency map of the motor 200 illustrated in Fig. 4;
Fig. 6 is a diagram illustrating a motor 300 according to Reference Example 2;
Fig. 7 is an efficiency map of the motor 300 illustrated in Fig. 6;
Fig. 8 is a diagram illustrating flux density distribution of the motor 200 of Reference Example 1;
Fig. 9 is a diagram illustrating flux density distribution of the motor 100 according to the first embodiment;
Fig. 10 is a diagram illustrating flux density distribution of the motor 300 of Reference Example 2;
Fig. 11 is a diagram illustrating a rotor 20 of a motor 400 according to a modification of the embodiment;
Fig. 12 is a diagram illustrating a motor 500 according to a second embodiment of the present disclosure;
Fig. 13 illustrates an efficiency map of the motor 500 according to the second embodiment illustrated in Fig. 12;
Fig. 14 is a diagram illustrating flux density distribution of the motor 500 according to the second embodiment;
Fig. 15 is a diagram illustrating a motor 600 according to a third embodiment of the present disclosure;
Fig. 16A is an enlarged view of the motor 200 of Reference Example 1 without q-axis flux barriers 601;
Fig. 16B is an enlarged view of the motor 600 of the third embodiment with the q-axis flux barriers 601;
Fig. 17 is a diagram for a comparison of maximum torque between three types of motors 200, 600, and 700;
Fig. 18 is a diagram illustrating distribution of torque generated on surfaces of the rotors 20 of the motor 200 of (a), the motor 700 of (b), and the motor 600 of (c) at a rotational speed of 15000 rpm;
Fig. 19A is a diagram illustrating flux density distribution of the motor 200 of (a);
Fig. 19B is a diagram illustrating flux density distribution of the motor 700 of (b);
Fig. 19C is a diagram illustrating flux density distribution of the motor 600 of (c);
Fig. 20 is a diagram for a comparison of efficiency between the motor 200 of (a), the motor 700 of (b), and the motor 600 of (c);
Fig. 21 is a diagram for a comparison of loss between the motor 600 of (a), the motor 700 of (b), and the motor 600 of (c);
Fig. 22A is a diagram illustrating eddy current loss in the motor 200 of (a);
Fig. 22B is a diagram illustrating eddy current loss in the motor 700 of (b);
Fig. 22C is a diagram illustrating eddy current loss in the motor 600 of (c); and
Fig. 23 is a diagram illustrating a motor 800 according to a fourth embodiment of the present disclosure.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

If a rotational speed is greater than or equal to a constant value, a phenomenon called voltage saturation where a relationship between a counter electromotive force generated in a motor and a power supply voltage is reversed occurs. A reduction in the amount of field flux that becomes a cause of the counter electromotive force is conceivable to mitigate the voltage saturation.

Hence, a method is known which performs what is called flux-weakening control to suppress the counter electromotive force of the motor and improve torque in a high-speed region. However, copper loss is increased by the amount of d-axis current required for flux-weakening control, which leads to a reduction in efficiency. Alternatively, it is also conceivable to replace a permanent magnet of a rotor with a permanent magnet with a weak magnetic force and improve torque in the high-speed region. However, this method also leads to a reduction in torque at low speed. Hence, for example, JP-A-2022-184461 proposes a control model where an inverse model of a motor is inserted downstream of a current controller. According to this model, it is possible to improve momentary voltage saturation in a step response.

The present inventors thought that it was possible to provide a high-torque, high-output motor in a wide operating range by using a general control system if a motor structure could be implemented which can suppress a counter electromotive force during high-speed rotation without reducing torque during low-speed rotation.

Hence, an object of the present disclosure is to provide a motor that could suppress a counter electromotive force during high-speed rotation without reducing torque during low-speed rotation.

A motor according to an aspect of the embodiment includes: a stator including a stator core having a tooth, and a winding wound around the tooth; and a rotor including a permanent magnet, in which at least a part of a portion, in which the permanent magnet embedded in the rotor faces the stator, of the rotor is provided with a non-magnetic portion.

**In** the motor according to another aspect of the embodiment, at least a part of the stator may include a non-linear soft magnetic material.

In the motor according to another aspect of the embodiment, the non-magnetic portion may be provided in such a manner as to obstruct magnetic flux on a d-axis from acting *on* the permanent magnet.

In the motor according to another aspect of the embodiment, the non-magnetic portion may be provided in such a manner as to be asymmetrical about a d-axis.

In the motor according to another aspect of the embodiment, the rotor may include a plurality of core pieces, and the plurality of core pieces may be laminated in such a manner that the non-magnetic portions provided to the core pieces that are adjacent are displaced from each other.

In the motor according to another aspect of the embodiment, the rotor may include a plurality of core pieces, and the plurality of core pieces may be laminated in such a manner that positions of the non-magnetic portions provided to the core pieces that are adjacent are symmetrical about a d-axis.

According to another aspect of the embodiment, the non-magnetic portion may be provided in such a manner as to extend in a q-axis direction.

According to another aspect of the embodiment, the non-magnetic portion may include a d-axis flux barrier extending in a d-axis direction, and a q-axis flux barrier extending in a q-axis direction.

According to the embodiment, it is possible to provide a motor that can suppress a counter electromotive force during high-speed rotation without reducing torque during low-speed rotation.

Embodiments of the present disclosure are described hereinafter with reference to the drawings. Note that descriptions of members having the same reference numerals as members already described are omitted in the detailed description for convenience of description. Moreover, the dimensions of each member illustrated in the drawings may be different from actual dimensions thereof for convenience of description.

### <First Embodiment>

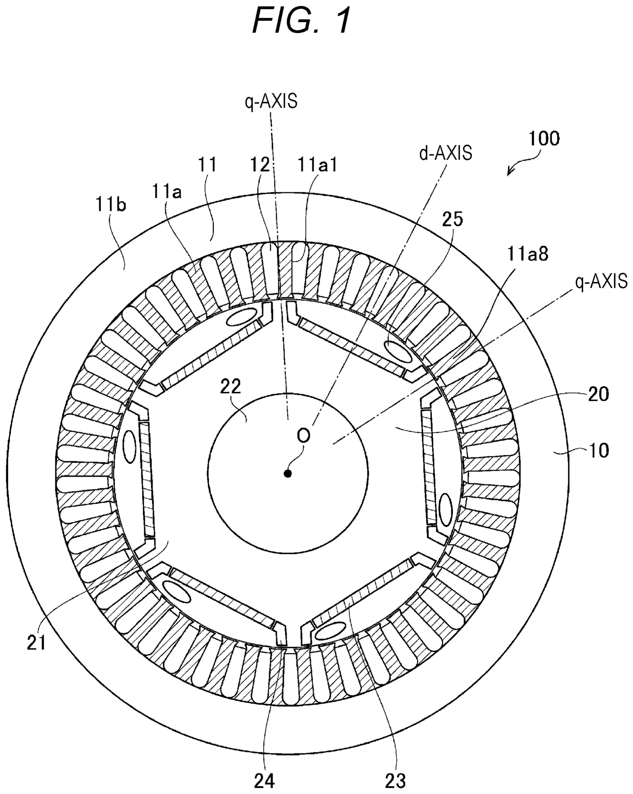

Fig. 1 is a diagram illustrating a motor 100 according to a first embodiment of the present disclosure. The motor 100 illustrated in Fig. 1 is an interior permanent magnet synchronous motor (IPMSM) with six poles, 45 slots, and three phases, distributed winding, and the number of slots per pole per phase q = 2.5. The motor 100 is of a rotating field type, and includes a stator 10 and a rotor 20 that can rotate relative to the stator 10. The rotor 20 rotates relative to the stator 10 about a rotation axis extending in a direction perpendicular to the page of Fig. 1. Note that in terms of the number of phases, number of poles, number of slots, and winding pattern of the motor of the present disclosure are not limited to the example of Fig. 1.

The stator 10 includes an approximately ring-shaped stator core 11. The stator core 11 includes a ring-shaped back yoke 11b and a plurality of teeth 11a placed on an inner side of the back yoke 11b. The teeth 11a are portions that protrude radially inward from a radially inner end of the back yoke 11b. The plurality of teeth 11a has approximately the same shape. Each of slots is provided between two adjacent teeth 11a.

Windings are placed in the slots. The windings are wound around the teeth 11a. Furthermore, the windings form stator coils 12. The stator coils 12 are wound around the teeth 11a, respectively, in a distributed winding form. The stator coils 12 are excited by alternating current from the outside.

The rotor 20 includes a cylindrical rotor core 21. The rotor core 21 is formed of a plurality of electromagnetic steel plates laminated in a rotation axis direction. An inner hole of the rotor core 21 serves as a shaft mounting hole 22. An unillustrated drive shaft is fixed in the shaft mounting hole 22. Rotation is transferred via the drive shaft to a target object that is driven by the motor 100.

The rotor core 21 of the rotor 20 is provided with a plurality of permanent magnets 23. The permanent magnets 23 are embedded in slots provided to the rotor core 21. The permanent magnets 23 have a flat plate shape. The plurality of permanent magnets 23 in the drawing has substantially the same size, material, and composition.

Moreover, the plurality of permanent magnets 23 is placed at regular intervals on a circumference around a rotation axis O in such a manner as to form six poles at positions 60° apart from one another. Therefore, magnetomotive forces for the stator coils 12 caused by the permanent magnets 23 are substantially equal. Moreover, two end portions of each of the permanent magnets 23 are each provided with a rotor air gap portion 24 extending radially outward. There is no member in the rotor air gap portions 24. Air is present in the rotor air gap portions 24.

In the motor 100 according to the first embodiment, the stator core 11 includes the ring-shaped back yoke 11b and the plurality of teeth 11a. The back yoke 11b includes a non-oriented electromagnetic steel plate being a type of soft magnetic material. The teeth 11a include a non-linear soft magnetic material. The non-linear soft magnetic material used in the first embodiment is defined as a material having characteristics that are not magnetized (maintains low flux density) before magnetic field strength H of a fixed value acts, but increase flux density sharply due to an increase in relative permeability µr if the magnetic field strength H exceeds the fixed value. Note that in Fig. 1, portions (the teeth 11a) including the non-linear soft magnetic substance are represented by hatching. In Fig. 1, hatching is not general hatching indicating a cross section. Hatching provided to the stator core 11 represents the portions including the non-linear soft magnetic substance. Moreover, hatching on the rotor core 21 represents the permanent magnets 23.

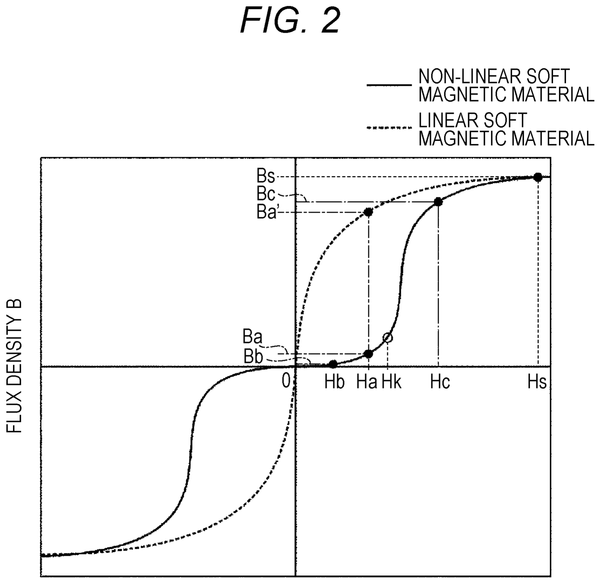

Here, the non-linear soft magnetic material is described in detail with reference to Fig. 2. Fig. 2 is a graph illustrating B-H curves of a general soft magnetic material and non-linear soft magnetic material. The horizontal axis of Fig. 2 represents the magnetic field strength H. The vertical axis of Fig. 2 represents flux density B. In Fig. 2, attention is given to the flux density B at the time when the magnetic field strength H of the general soft magnetic material represented by, for example, a non-oriented electromagnetic steel plate is around zero. At this point in time, as illustrated in Fig. 2, when the magnetic field acts, the flux density B increases steeply. As the magnetic field strength H increases, the flux density B converges to saturation flux density Bs. In other words, when the magnetic field acts, the flux density B of the general soft magnetic material increases quickly. On the other hand, as the magnetic field strength H increases further, the degree of increase in the flux density B becomes gentler. The flux density B then converges to the saturation flux density Bs. Note that a material having high relative permeability µr and high saturation flux density Bs is generally developed as the soft magnetic material. Here, the relative permeability µr indicates the gradient of the B-H curve of Fig. 2. Moreover, a material having the flux density B that increases immediately after the magnetic field acts is generally required as the electromagnetic steel plate being a type of soft magnetic material. In the following description, the general soft magnetic material having such a characteristic in which the flux density B increases quickly even with a weak magnetic field is also referred to as a linear soft magnetic material for comparison with the non-linear soft magnetic material.

In contrast, with a focus on the flux density at the time when the magnetic field strength H is around zero, the flux density of the non-linear soft magnetic material toward which the inventors directed attention changes only gradually even when the magnetic field acts. However, when the magnetic field strength H reaches a fixed value Hk, the flux density B increases sharply. As the magnetic field strength H increases further, the flux density B converges to the saturation flux density Bs. In other words, the flux density B of the non-linear soft magnetic material resists increasing while a weak magnetic field of less than or equal to a fixed value is acting. On the other hand, when a strong magnetic field of greater than or equal to the fixed value acts, the flux density B increases sharply. To put another way, the non-linear soft magnetic material has a characteristic that resists passing the magnetic flux therethrough when the weak magnetic field strength H acts, but suddenly becomes easy to pass the magnetic flux therethrough when the strong magnetic field strength H acts. In Fig. 2, the rising magnetic field Hk indicates the magnetic field strength at which it becomes easy to pass the magnetic flux. On the B-H curves, the rising magnetic field Hk indicates the magnetic field strength at the time when the flux density B of the non-linear soft magnetic material reaches flux density of 25% of the saturation flux density Bs of the non-linear soft magnetic material. Note that a material having a rising magnetic field Hk of 6 kA/m is adopted as the non-linear soft magnetic material for the stator 10 of the motor 100 illustrated in Fig. 1. Moreover, a non-oriented electromagnetic steel plate specified as 35H300 in grade (made by Nippon Steel Corporation) is adopted for a portion that does not include the non-linear soft magnetic material.

Return to Fig. 1. The rotor core 21 of the motor 100 according to the first embodiment is provided with a non-magnetic portion 25. The non-magnetic portion 25 is a portion having lower relative permeability than other portions. For example, the non-magnetic portion 25 can be formed by a hole provided to the rotor core 21 as illustrated, or a notch provided to an outer periphery of the rotor core 21. The non-magnetic portion 25 may be formed as a portion of air. Alternatively, the non-magnetic portion 25 may be formed of a portion including a nonmetal material having low relative permeability such as resin. Moreover, the non-magnetic portion 25 may include a magnetic composite material with low iron loss.

At least a part of the non-magnetic portion 25 is provided to a portion, in which the permanent magnet 23 embedded in the rotor 20 faces the stator 10, of the rotor 20. The non-magnetic portion 25 is provided at a position that obstructs a magnetic force acting between the permanent magnet 23 and the tooth 11a. Consequently, the non-magnetic portion 25 functions in such a manner as to weaken the action of the magnetic force of the permanent magnet 23 on the tooth 11a. The non-magnetic portion 25 is provided in such a manner as to correspond to each of the permanent magnets 23. In the illustrated example, six non-magnetic portions 25 are provided for six permanent magnets 23.

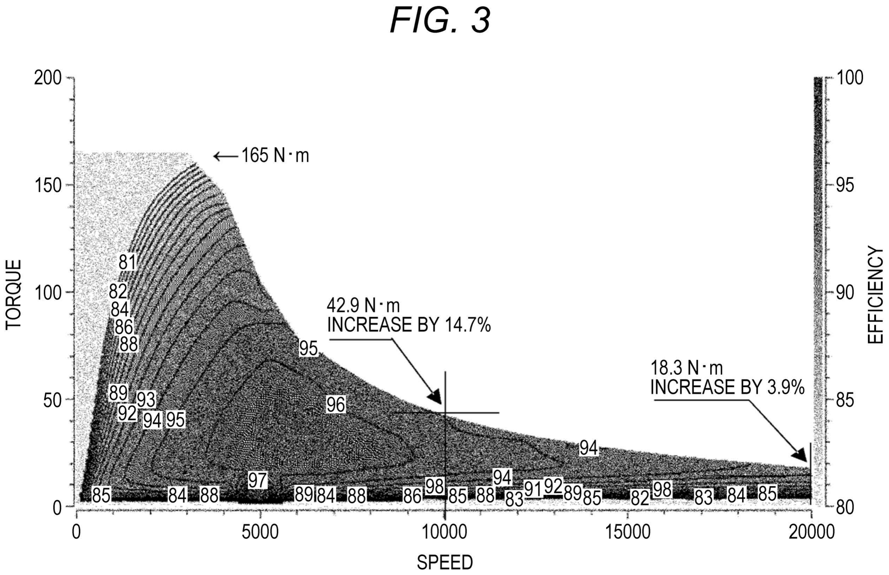

Fig. 3 illustrates an efficiency map of the motor 100 of the first embodiment illustrated in Fig. 1. In Fig. 3, the horizontal axis represents the rotational speed of the motor 100. The vertical axis represents torque on the motor 100. Operating conditions with equal efficiency are linked by contour lines. In order to discuss the characteristics of the motor 100 according to the first embodiment, Reference Examples 1 and 2 are described.

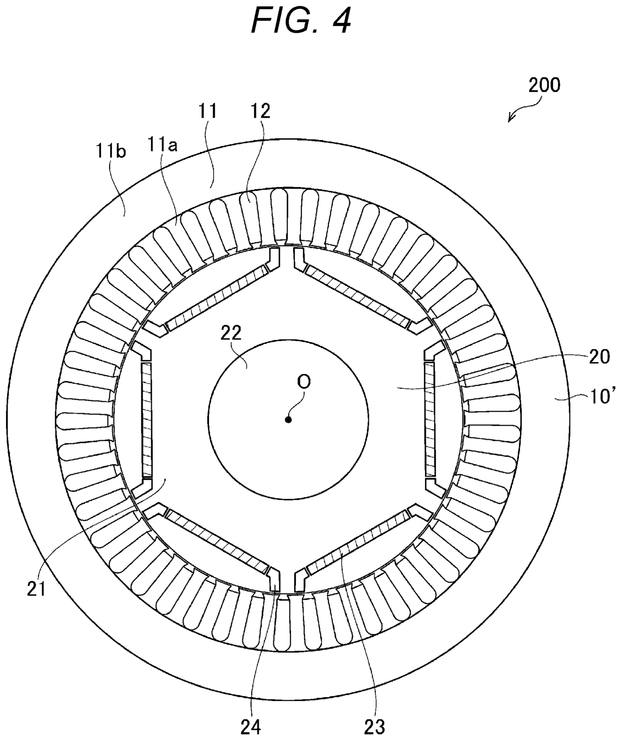

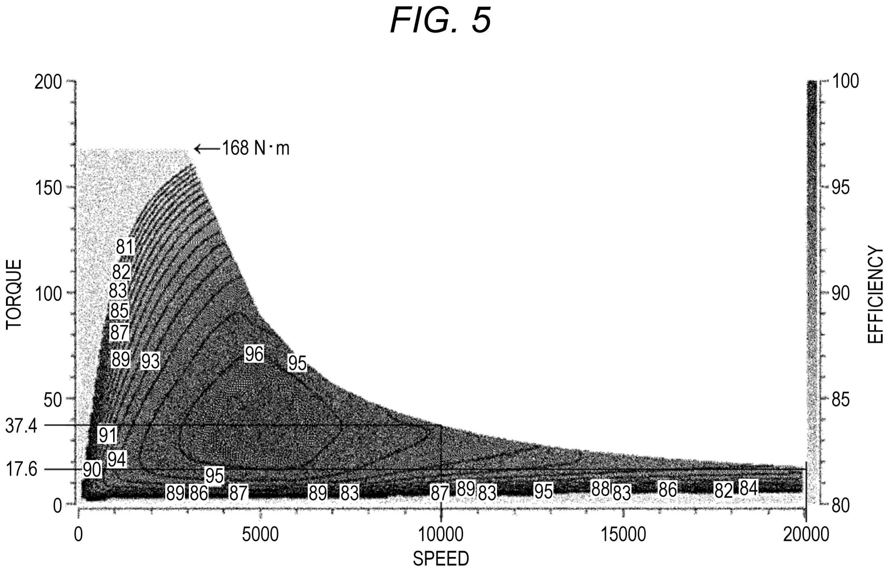

Fig. 4 is a diagram illustrating a motor 200 according to Reference Example 1. As illustrated in Fig. 4, the motor 200 does not include the non-magnetic portions 25. Moreover, the motor 200 is an interior permanent magnet synchronous motor that does not have the portions including the non-linear soft magnetic substance. The number of poles and the number of slots are the same as those of the motor 100 of the first embodiment illustrated in Fig. 1. Fig. 5 illustrates an efficiency map of the motor 200 illustrated in Fig. 4.

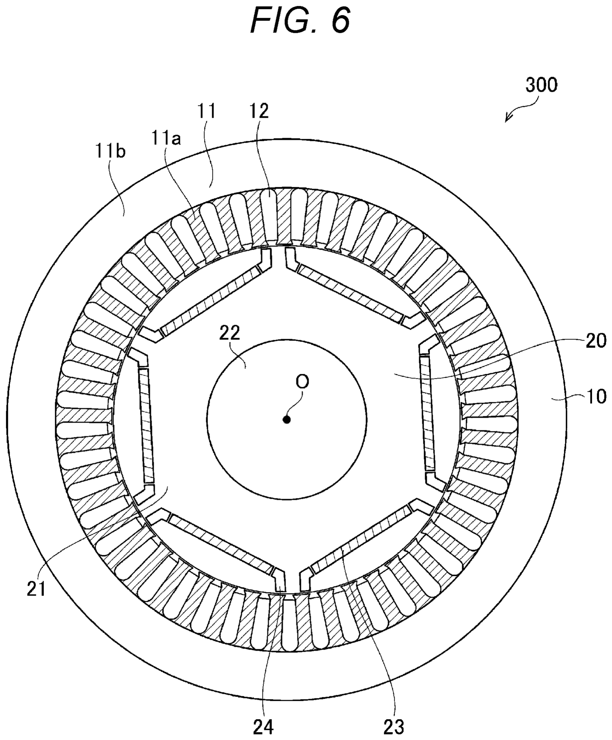

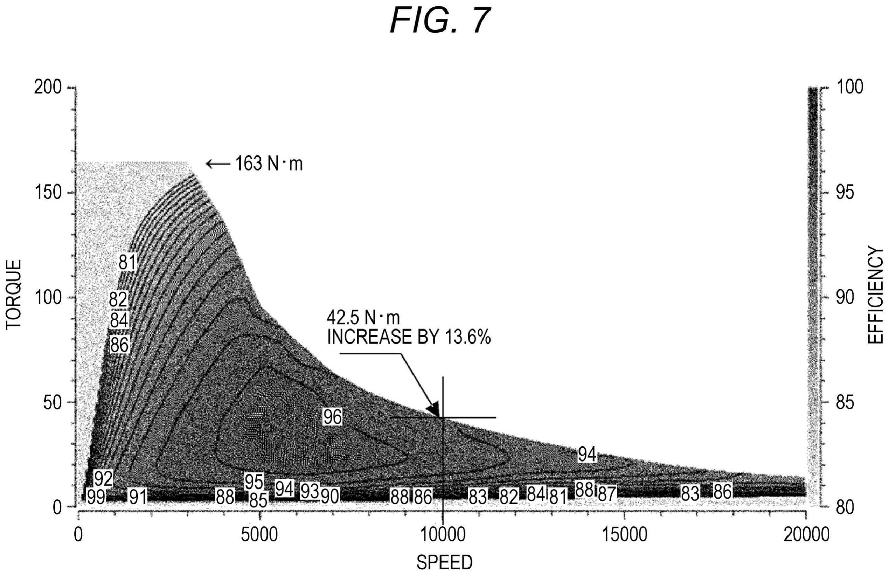

Fig. 6 is a diagram illustrating a motor 300 according to Reference Example 2. As illustrated in Fig. 6, the stator 10 of the motor 300 includes the portions including the non-linear soft magnetic substance. However, the rotor core 21 does not include the non-magnetic portions 25. In the other respects, the motor 300 are the same as the motor 200 of Reference Example 1. Fig. 7 illustrates an efficiency map of the motor 300 illustrated in Fig. 6.

Firstly, Fig. 5 is compared with Fig. 7. In other words, the motor 200 of Reference Example 1 that does not include the non-magnetic portions 25 and does not include the non-linear soft magnetic material as the stator core 11 is compared with the motor 300 of Reference Example 2 that does not include the non-magnetic portions 25 likewise but includes the non-linear soft magnetic material as the stator core 11.

As can be seen from Figs. 5 and 7, torque on the motor 200 of Reference Example 1 is 168 Nm in a low-speed region where the rotational speed is less than or equal to 3,000 min⁻¹. In contrast, torque on the motor 300 of Reference Example 2 is 163 Nm. In other words, the torque on the motor 300 of Reference Example 2 in the low-speed region is slightly lower than the torque on the motor 200 of Reference

### Example 1.

The torque on the motor 200 of Reference Example 1 is 37.4 Nm at medium speed where the rotational speed is approximately 10,000 min⁻¹. In contrast, the torque on the motor 300 of Reference Example 2 is 42.5 Nm. In other words, in the medium-speed region, the torque on the motor 300 of Reference Example 2 at the same rotational speed increases by as much as 13.6% compared with the torque on the motor 200 of Reference Example 1.

Moreover, a high-efficiency region of the motor 300 of Reference Example 2 is wider than a high-efficiency region of the motor 200 of Reference Example 1. Specifically, an upper limit of a rotational speed at which the motor 200 of Reference Example 1 achieves 95% efficiency is less than 10,000 min⁻¹. In contrast, an upper limit of a rotational speed at which the motor 300 of Reference Example 2 achieves 95% efficiency is approximately 12,000 min⁻¹. In other words, efficiency is enhanced in a low-torque, high-speed region in the motor 300 of Reference Example 2 as compared with the motor 200 of Reference Example 1.

### (Effects of Non-linear Soft Magnetic Substance)

If the motor 300 of Reference Example 2 is driven in the low-torque, high-speed region, the amount of magnetic flux generated on the stator coils 12 is small. Hence, the magnetic flux of the permanent magnets 23 of the rotor 20 is dominant. In this state, the magnetic field strength is lower than the rising magnetic field Hk of the non-linear soft magnetic material used for the teeth 11a. Hence, the flux density of the teeth 11a is low. Hence, even if the rotor 20 is operated at high speed, the induced voltage in the stator coils 12 is low. Consequently, copper loss in the stator coils 12 can be suppressed. Furthermore, unless magnetic field of strength greater than or equal to a certain magnitude acts on the teeth 11a, the flux density does not increase. Hence, the flux density of the teeth 11a in a part of an area that contribute to torque increases, and the flux density of the other portion that does not contribute to torque can be kept low. Consequently, iron loss caused by the teeth 11a that do not contribute to torque can be suppressed. Hence, the efficiency can be enhanced in combination. In other words, the efficiency is enhanced in the low-torque, high-speed region.

Furthermore, when the motor is driven at high torque, the amount of current passed through the stator coils 12 increases. In this state, the strength of the magnetic field acting on the teeth 11a is a combined total of the magnetic flux of the permanent magnets 23 and the magnetic flux of the stator coils 12. Hence, the strength of the magnetic field that acts is greater than the rising magnetic field Hk of the non-linear soft magnetic material. As a result, the flux density of the teeth 11a increases. Consequently, the motor 300 of Reference Example 2 can output high torque in the medium-speed region.

Note that if a high torque output is required, a high voltage is applied to the stator coils 12. In this state, high magnetic field strength is applied to the stator coils 12. Hence, even if the stator coils 12 include the non-linear soft magnetic material, or even if the stator coils 12 include the non-linear soft magnetic material, the flux density of the stator coils 12 is likewise the saturation flux density Bs. Hence, the maximum torque on the motor 300 of Reference Example 2 is the same as the maximum torque on the motor 200 of Reference Example 1. In this manner, the non-linear soft magnetic material is used for at least a part of the stator core 11; therefore, it is possible to increase the efficiency of the motor.

Next, Fig. 3 is compared with Fig. 7. The torque on the motor 300 of Reference Example 2 is 163 Nm in the low-speed region where the rotational speed is less than or equal to 3,000 min⁻¹. In contrast, the torque on the motor 100 of the first embodiment is 165 Nm. In other words, the motor 100 according to the first embodiment has higher torque in the low-speed region than the motor 300 of Reference Example 2.

The torque on the motor 300 of Reference Example 2 at medium speed where the rotational speed is approximately 10,000 min⁻¹ is 42.5 Nm. In contrast, the torque on the motor 100 according to the first embodiment is 42.9 Nm. In other words, in the medium-speed region, the torque on the motor 100 according to the first embodiment at the same rotational speed is higher than the torque on the motor 300 of Reference Example 2.

Moreover, a high-efficiency region of the motor 100 according to the first embodiment is wider than the high-efficiency region of the motor 300 of Reference Example 2. Specifically, an upper limit of the rotational speed at which the motor 300 of Reference Example 2 achieves 95% efficiency is approximately 12,000 min⁻¹. In contrast, an upper limit of a rotational speed at which the motor 100 according to the first embodiment achieves 95% efficiency is approximately 13,500 min⁻¹. In other words, the motor 100 according to the first embodiment achieves high torque in the low-speed region and high efficiency in the high-speed rection. Moreover, the motor 100 according to the first embodiment has higher torque in the high-speed region than the motor 300 of Reference Example 2. The torque is approximately equal to the torque on the motor 200 of Reference Example 1.

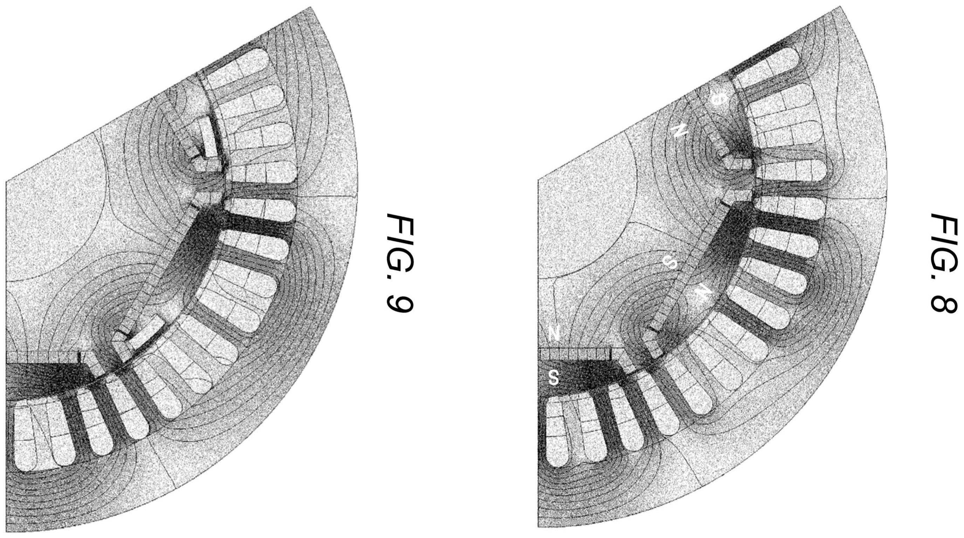

Next, a mechanism of the motor 100 according to the first embodiment, which exerts the above-mentioned effects, is described with reference to Figs. 8 and 9.

Fig. 8 is a diagram illustrating flux density distribution of the motor 200 of Reference Example 1. Fig. 9 is a diagram illustrating flux density distribution of the motor 100 according to the first embodiment. Both of Figs. 8 and 9 illustrate the flux density distribution at the time when the rotor rotates at a rotational speed of 15,000 min⁻¹ in a counterclockwise direction in the drawings. In the example illustrated in Fig. 9, the non-magnetic portion 25 is provided in an area, which is located in a clockwise direction relative to the d-axis, of the rotor 20. In Figs. 8 to 10, the darker color indicates a higher flux density distribution.

As illustrated in Fig. 8, the flux density of the teeth 11a of the motor 200 of Reference Example 1 is greater than or equal to 1T. Particularly the flux densities of two teeth 11a located around an end in the counterclockwise direction and an end in the clockwise direction of the permanent magnet 23 are increased.

In contrast, in terms of the flux densities of the teeth 11a of the motor 100 according to the first embodiment illustrated in Fig. 9, the flux densities vary according to the tooth 11a.

### (Effects of Non-magnetic Portions 25)

It is found, through observation of the flux density of each of the teeth 11a at a certain time during the generation of torque by the teeth 11a, that there are the teeth 11a that generate torque, and the teeth 11a that have a high flux density and do not contribute to the generation of torque or the teeth 11a that generate torque in a negative direction. The torque in the negative direction is the torque that acts on the rotor 20 in such a manner as to reduce the speed of the rotor 20. Among the teeth 11a, the teeth 11a that generate zero or minus torque are causes that cause various types of performance degradation. The performance degradation includes the braking, torque ripple, and loss of torque.

Hence, in the motor 100 according to the first embodiment, at least parts of portions, in which the permanent magnets 23 embedded in the rotor 20 face the stator 10, of the rotor 20 are provided with the non-magnetic portions 25. The non-magnetic portions 25 make the magnetic flux of the teeth 11a that generate the torque in the negative direction hard to pass therethrough. The action of the non-magnetic portions 25 is described below.

Here, attention is given to one permanent magnet 23, and the flux density of eight teeth 11a located around the permanent magnet 23 is discussed. As illustrated in Fig. 1, a virtual line extending radially from around the center of the permanent magnet 23 is referred to as the d-axis. Moreover, a virtual line passing between the adjacent permanent magnets 23 and extending radially is referred to as the q-axis. It can also be said that the eight teeth 11a discussed here are the teeth 11a located between two q-axes. For the sake of convenience, of the eight teeth 11a, the tooth 11a located at the end in the counterclockwise direction is referred to as a first tooth 11a1. The tooth 11a located at the end in the clockwise direction is referred to as an eighth tooth 11a8.

A case where the first tooth 11a1 generates a magnetic force that attracts the permanent magnet 23 is examined. In other words, a case where torque that increases the speed of the rotor 20 is therefore generated is examined. However, at this point in time, in contrast to the first embodiment, a comparable degree of flux density also acts on the eighth tooth 11a8 in the motor 200 of Reference Example 1 illustrated in Fig. 8, which does not include the non-magnetic portion 25. Hence, the eighth tooth 11a8 results in attracting the permanent magnet 23. The magnetic force of the eighth tooth 11a8 that attracts the permanent magnet 23 results in reducing the speed of the rotor 20 that rotates in the counterclockwise direction.

However, as illustrated in Figs. 1 and 9, the non-magnetic portion 25 is provided around the end in the clockwise direction of the rotor 20 of the motor 100 according to the first embodiment in such a manner as to weaken the magnetic force acting on the stator 10 from the permanent magnet 23. In other words, the non-magnetic portion 25 is provided in such a manner as to make the magnetic flux of the eighth tooth 11a8 that generates the torque in the negative direction hard to pass therethrough. Hence, it is hard for the flux density to increase on the eighth tooth 11a8.

In this manner, in the motor 100 according to the first embodiment, the magnetic force that increases the speed of the rotor 20 in the counterclockwise direction, which is generated between the permanent magnet 23 and the first tooth 11a1, is maintained as it is. In addition, the magnetic force that reduces the speed of the rotor 20 in the counterclockwise direction, which is generated between the permanent magnet 23 and the eighth tooth 11a8, is reduced. Hence, the motor 100 according to the first embodiment can output higher torque even at the same speed than the motor 200 of Reference Example 1, or the motor 300 of Reference Example 2.

Moreover, only an effective component, which becomes torque in a positive direction, of magnetic flux by a field magnetomotive force that is linked with the winding acts. On the other hand, the rest of the magnetic flux is suppressed. Hence, it is hard to generate a counter electromotive force even during high-speed rotation. In other words, voltage saturation due to high-speed drive is improved. As a result, high torque can be outputted. Note that it is not necessary for the motor 100 according to the first embodiment to use permanent magnets having a particularly weak magnetic force. Hence, high torque can be outputted also during low-speed rotation.

Furthermore, overall, the stator 10 of the motor 100 according to the first embodiment illustrated in Fig. 9 has more low-flux density areas than the stator 10 of the motor 200 of Reference Example 1 illustrated in Fig. 8. Hence, it is hard for iron loss to occur. Moreover, there are many low-flux density areas, and therefore, the amount itself of the magnetic flux that is linked with the stator coils 12 is reduced. Hence, a counter electromotive force is suppressed. The effect of suppression of the counter electromotive force becomes more remarkable as the motor 100 is rotated at a higher speed. In this manner, in the motor 100 according to the first embodiment, it is possible to provide a motor that can suppress a counter electromotive force during high-speed rotation without reducing torque during low-speed rotation.

Note that in the first embodiment, at least a part of the teeth 11a includes the non-linear soft magnetic substance. The flux density of the non-linear soft magnetic substance does not increase unless a strong magnetic field acts, which makes the flux density of the eighth tooth 11a8 harder to increase.

Moreover, the examples of the motor including the teeth 11a that includes the non-linear soft magnetic substance and being provided with the holes around the ends of the permanent magnets 23 in the clockwise direction have been described with reference to Figs. 1 and 9. However, the embodiment is not limited to these examples. If the portion including the non-linear soft magnetic substance is provided to at least a part of the stator 10, the flux density does not increase unless magnetic field strength greater than or equal to a certain magnitude acts. Hence, it is possible to keep the flux density of a portion that does not contribute to torque low. Consequently, it is possible to suppress iron loss due to the teeth 11a that do not contribute to the generation of torque. As a result, the efficiency can be enhanced in combination. In other words, the non-linear soft magnetic substance is provided to at least a part of the stator 10 to make it possible to enhance the efficiency of the motor 100.

Note that the non-magnetic portions 25 may be provided in such a manner as to obstruct magnetic flux on the d-axis from acting on the permanent magnets 23. Moreover, as illustrated in Fig. 1, the non-magnetic portions 25 are preferably provided to the permanent magnets 23, respectively, in such a manner as to be asymmetrical about the d-axis. In the illustrated examples, the non-magnetic portions 25 are not provided to portions, which are located in the counterclockwise direction relative to the d-axes, of the rotor 20. On the other hand, the non-magnetic portions 25 are provided to the portions, which are located in the clockwise direction relative to the d-axes, of the rotor 20. Consequently, when the rotor 20 rotates in the counterclockwise direction, the characteristics such as improvements in torque and efficiency at the time of rotating in the counterclockwise direction are enhanced.

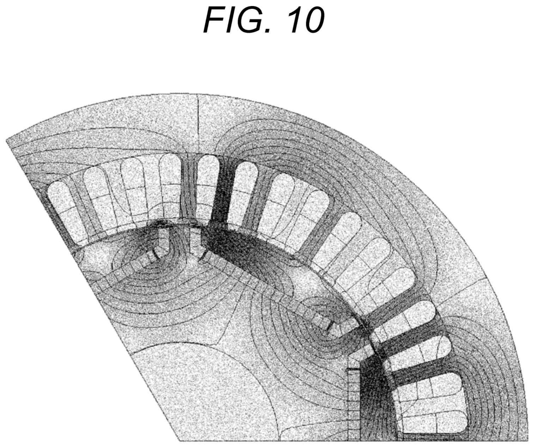

Note that Fig. 10 is a diagram illustrating flux density distribution of the motor 300 of Reference Example 2. As illustrated in Fig. 10, at least a part of the stator 10 includes the non-linear soft magnetic substance. However, the rotor 20 does not include the non-magnetic portions 25. In the motor 300 of Reference Example 2, the flux density of the entire stator 10 is reduced while the flux density around the first teeth 11a1 is increased. However, the effect of reducing the flux density of the eighth teeth 11a8 is not sufficient as compared to the motor 100 according to the first embodiment illustrated in Fig. 9. Hence, the effect of reducing the flux density of the eighth teeth 11a8 based on the provision of the non-magnetic portions 25 to the rotor 20 can be proved.

### <Modification>

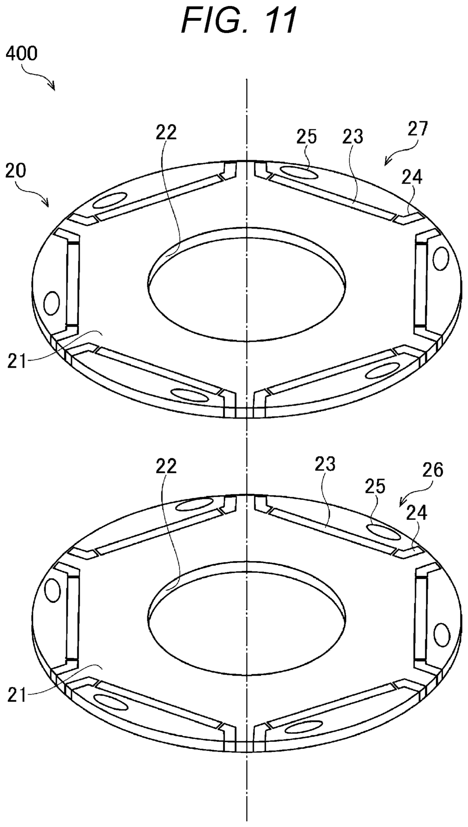

Note that the performance of the above-mentioned motor 100 tends to improve in a specific rotational direction. Hence, a motor 400 such as illustrated in Fig. 11 may be configured. In the motor 400 according to a modification of the embodiment, among a plurality of core pieces that are laminated (laminated core pieces), which form the rotor 20, the non-magnetic portions 25 of the laminated core pieces adjacent in a lamination direction are displaced from each other. Fig. 11 is a diagram illustrating the rotor 20 of the motor 400 according to the modification of the embodiment.

The motor 400 of the modification illustrated in Fig. 11 includes a first laminated core piece 26 and a second laminated core piece 27. The first laminated core piece 26 is not provided with the non-magnetic portions 25 in the clockwise direction relative to the d-axes as in the example illustrated in Fig. 1. On the other hand, the non-magnetic portions 25 are provided in the counterclockwise direction relative to the d-axes. The second laminated core piece 27 is provided with the non-magnetic portions 25 in the clockwise direction relative to the d-axes in contrast to the first laminated core piece 26. On the other hand, the non-magnetic portions 25 are not provided in the counterclockwise direction relative to the d-axes. These first laminated core piece 26 and second laminated core piece 27 are laminated in the rotation axis direction of the motor 400 without regard to the rotation direction.

With such a configuration, the non-magnetic portions 25 of the laminated core pieces 26 and 27 adjacent in the rotation axis direction (lamination direction) are displaced from each other. According to such a motor 400, a counter electromotive force during high-speed rotation is suppressed without reducing torque during low-speed rotation.

Moreover, as illustrated in Fig. 11, preferably, not only are the non-magnetic portions 25 of the adjacent laminated core pieces 26 and 27 simply displaced from each other, but also the laminated core pieces 26 and 27 are laminated in such a manner that the positions of the non-magnetic portions 25 of the adjacent laminated core pieces 26 and 27 are symmetrical about the d-axes.

### <Second Embodiment>

Note that in the motor 100 described as the example of the first embodiment, the rotor 20 includes the non-magnetic portions 25, and also at least a part of the stator 10 includes the non-linear soft magnetic substance. However, the rotor 20 may include the non-magnetic portions 25 while the stator 10 may not include the non-linear soft magnetic substance as in a motor 500 according to a second embodiment described below.

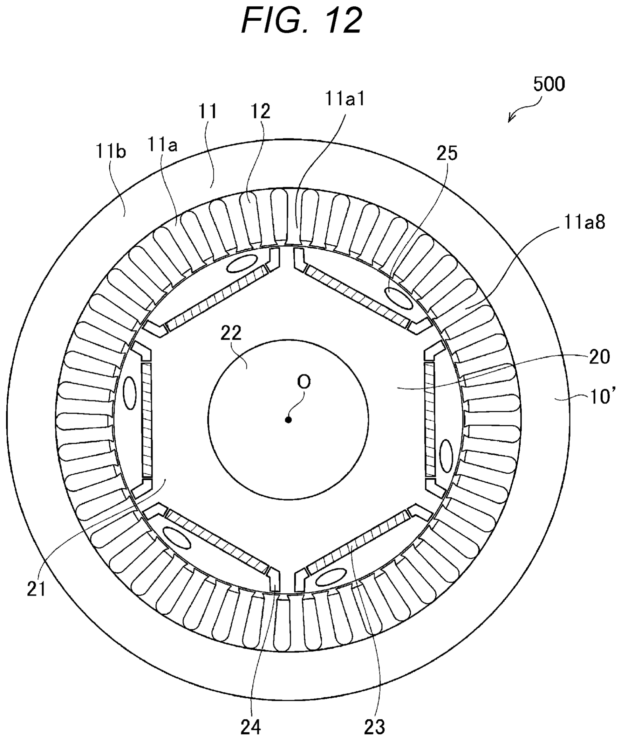

Fig. 12 is a diagram illustrating the motor 500 according to the second embodiment of the present disclosure. As illustrated in Fig. 12, the motor 500 is provided with the non-magnetic portion 25 at at least a part of each of portions, in which the permanent magnets 23 embedded in the rotor 20 face the stator 10, of the rotor 20. Moreover, the entire stator 10 includes a non-oriented electromagnetic steel plate that is not the non-linear soft magnetic substance.

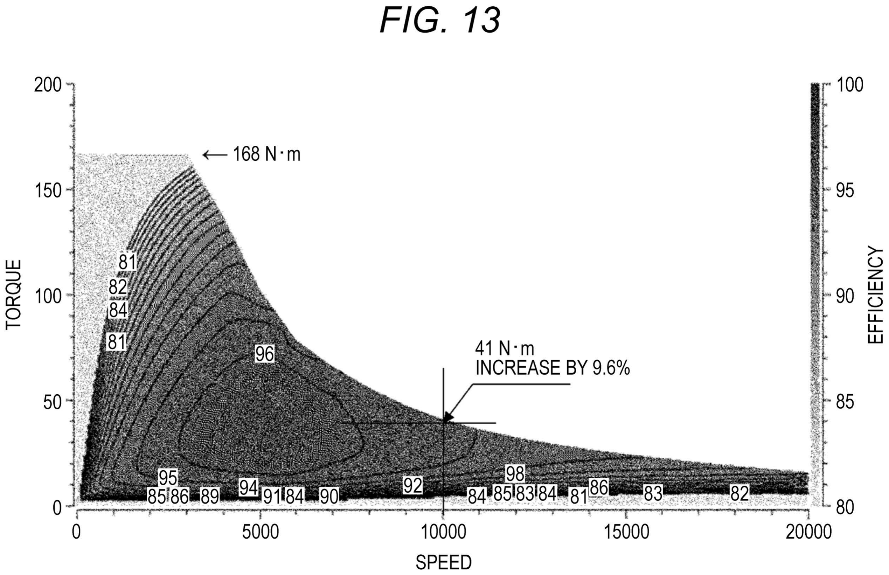

Fig. 13 is an efficiency map of the motor 500. As illustrated in Fig. 13, the maximum torque in the low-speed region is 168Nm. In this manner, torque during low-speed rotation is not reduced. Moreover, the maximum torque in the high-speed region of the motor 500 according to the second embodiment is comparable with that of the motor 200 of Reference Example 1.

Furthermore, an upper limit of a rotational speed at which the motor 500 according to the second embodiment achieves 95% efficiency is approximately 11,000 min⁻¹. This upper limit value is greater than approximately 95,000 min⁻¹ being the upper limit of the rotational speed at which the motor 200 of Reference Example 1 achieves 95% efficiency. In other words, the motor 500 according to the second embodiment also achieves high torque in the low-speed region and high efficiency in the high-speed region. The maximum torque of the motor 500 according to the second embodiment at a rotational speed of 10,000 min⁻¹ is 41 N·m. This value is increased by 9.6% as compared with 37.4 N·m being the maximum torque of the motor 200 of Reference Example at a rotational speed of 10,000 min⁻¹. In this manner, the motor 500 according to the second embodiment can also prove that it is possible to suppress a counter electromotive force during high-speed rotation without reducing torque during low-speed rotation.

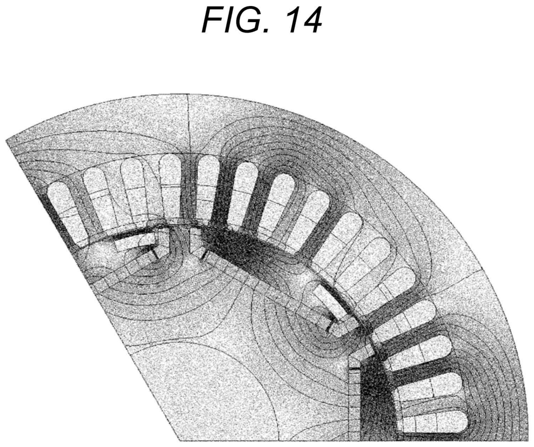

Fig. 14 is a diagram illustrating flux density distribution of the motor 500 according to the second embodiment. In Fig. 14, the darker color indicates a higher flux density distribution. As can be seen from a comparison of the motor 200 of Reference Example 1 of Fig. 8 and the motor 500 according to the second embodiment of Fig. 14, the magnitude of the flux density around the first tooth 11a1 is maintained in the motor 500 according to the second embodiment. In addition, the flux density around the eighth tooth 11a8 is reduced. Hence, the motor 500 according to the second embodiment can also suppress a counter electromotive force during high-speed rotation without reducing torque during low-speed rotation.

### <Third Embodiment>

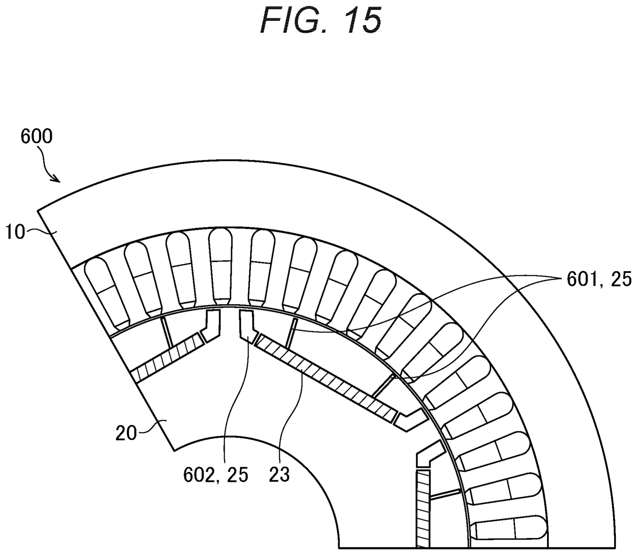

In the above-mentioned first and second embodiments, the elliptic non-magnetic portions 25 having the major axis in a d-axis direction are described. However, the present disclosure is not limited thereto. Fig. 15 is a diagram illustrating a motor 600 according to a third embodiment of the present disclosure. At least a part of the stator 10 of the motor 600 according to the third embodiment includes the non-linear soft magnetic material. In the embodiment, the non-magnetic portions 25 extending in a q-axis direction are provided as illustrated in Fig. 15. The illustrated non-magnetic portions 25 are a slit extending from the right portion (the end in the clockwise direction) of each of the permanent magnets 23 to near a surface of the rotor 20, and a slit extending from the left portion (the end in the counterclockwise direction) of each of the permanent magnets 23 to near the surface of the rotor 20. In the following description, the non-magnetic portions 25 extending in the q-axis direction are particularly referred to as q-axis flux barriers 601.

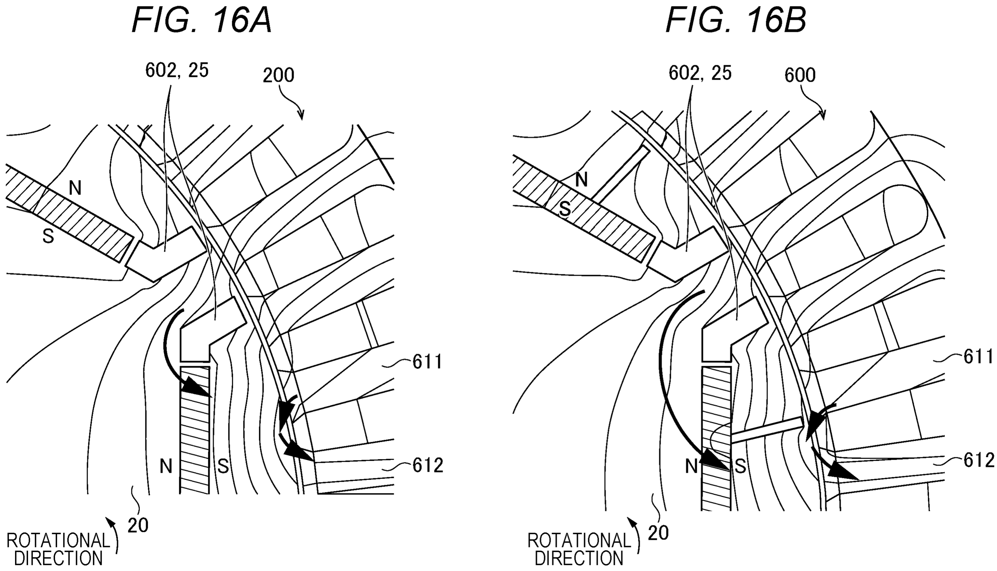

Figs. 16A and 16B are diagrams for explaining the operation of the q-axis flux barriers 601. Fig. 16A is an enlarged view of the motor 200 of Reference Example 1 without the q-axis flux barriers 601. Fig. 16B is an enlarged view of the motor 600 of the third embodiment with the q-axis flux barriers 601. It is assumed in Figs. 16A and 16B that the rotor 20 rotates in the counterclockwise direction,

### (Torque Improvement)

As illustrated in Fig. 16A, attention is focused on magnetic flux passing through a first tooth 611 and a second tooth 612, which are adjacent in a circumferential direction. Note that it is clearly mentioned that the first tooth 611 mentioned here is not at all relevant to the above-mentioned first tooth 11a1. Magnetic flux passing through the second tooth 612 from the first tooth 611 via the rotor 20 gives the torque in the positive direction (the counterclockwise direction) and also the torque in the negative direction to the rotor 20. Specifically, in the illustrated example, the magnetic flux passing through the rotor 20 from the first tooth 611 gives the torque in the positive direction to the rotor 20, but the magnetic flux passing through the second tooth 612 from the rotor 20, in contrast, gives the torque in the negative direction.

Here, the presence of the q-axis flux barrier 601 allows regulating the amount of the magnetic flux flowing between the first tooth 611 and the second tooth 612, and the rotor 20 as illustrated in Fig. 16B. In other words, without the q-axis flux barrier 601, the amount of the magnetic flux entering the rotor 20 from the first tooth 611 is equal to the amount of the magnetic flux leaving the rotor 20 to the second tooth 612 as illustrated in Fig. 16A, but with the q-axis flux barrier 601, the amount of the magnetic flux entering the rotor 20 from the first tooth 611 can be made different from the amount of the magnetic flux leaving the rotor 20 to the second tooth 612 as illustrated in Fig. 16B. In this manner, the q-axis flux barriers 601 control the amount of magnetic flux, and therefore, the torque in the positive direction can be increased. Note that the effect of increasing the torque in the positive direction can be enhanced by adjusting the positions where the q-axis flux barriers 601 are provided, and the size of the q-axis flux barriers 601.

### (Increase in Maximum Torque)

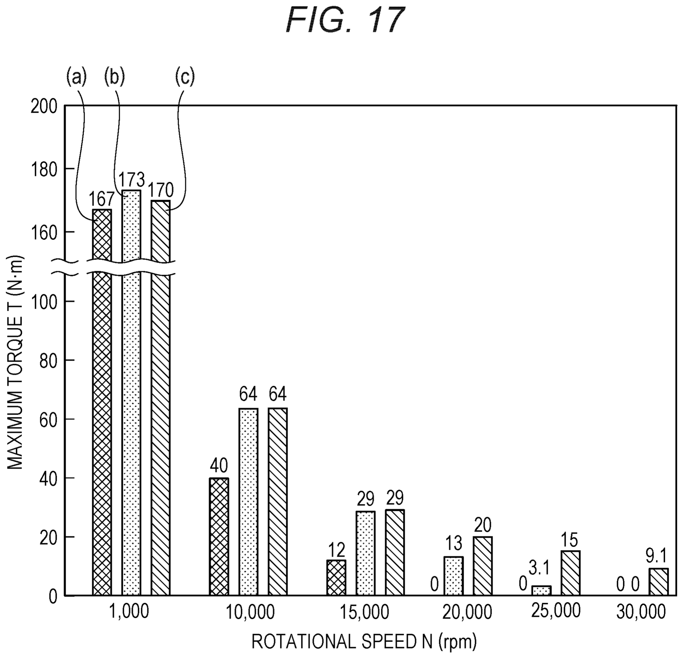

Fig. 17 is a diagram for a comparison of maximum torque between three types of motors 200, 600, and 700. In Fig. 17, (a) denotes the motor 200 of Reference Example 1 being an interior permanent magnet synchronous motor that does not include the q-axis flux barriers 601 and does not have the portions including the non-linear soft magnetic substance, (b) denotes the interior permanent magnet synchronous motor 700 that includes the q-axis flux barriers 601 but does not have the portions including the non-linear soft magnetic substance, and (c) denotes the motor 600 of the third embodiment. Fig. 17 illustrates the maximum torque that can be generated on the motors 200, 600, and 700 of (a) to (c) under a condition of a phase voltage of 600 V or less/a phase current of 300 A or less.

As illustrated in Fig. 17, the motor 700 of (b) increases in maximum torque at 1000 rpm being a low-rotational speed region as compared to the motor 200 of (a). The motor 600 of the third embodiment of (c) exerts performance equivalent to (b) in the low-rotational speed region, and furthermore, increases in maximum torque in a high-rotational speed region greater than or equal to 20000 rpm as compared to the motor 700 of (b).

### (Improvement in Torque Distribution)

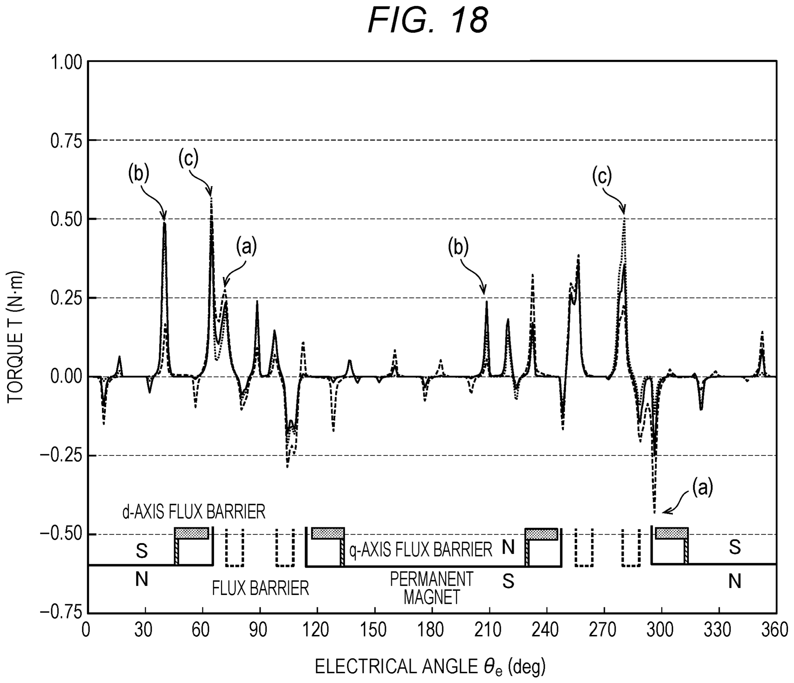

Fig. 18 is a diagram illustrating distribution of torque generated on surfaces of the rotors 20 of the motor 200 of (a), the motor 700 of (b), and the motor 600 of (c) at a rotational speed of 15000 rpm. The motor 200 of (a), the motor 700 of (b), and the motor 600 of (c) in Figs. 18 to 21 are synonymous with the motor 200 of (a), the motor 700 of (b), and the motor 600 of (c) in Fig. 17.

In terms of torque generated on the tip of the tooth, the torque in the positive direction increases due to the q-axis flux barrier 601 as described above. Hence, the motor 700 of (b) increases in the torque in the positive direction at an electrical angle of, for example, 45 degrees as compared to the motor 200 of (a). Moreover, the motor 600 of (c) increases further in the torque in the positive direction at an electrical angle of, for example, 60 degrees as compared to the motor 700 of (b). This is because the torque in the positive direction that has increased due to the q-axis flux barrier 601 increases further as a result of higher concentration of magnetic flux due to the non-linear soft magnetic material.

Moreover, it can also be confirmed from Fig. 18 that the motor 700 of (b) and the motor 600 of (c) reduce in the torque in the negative direction at an electrical angle of, for example, 115 degrees as compared to the motor 200 of (a).

### (Improvement in Flux Density)

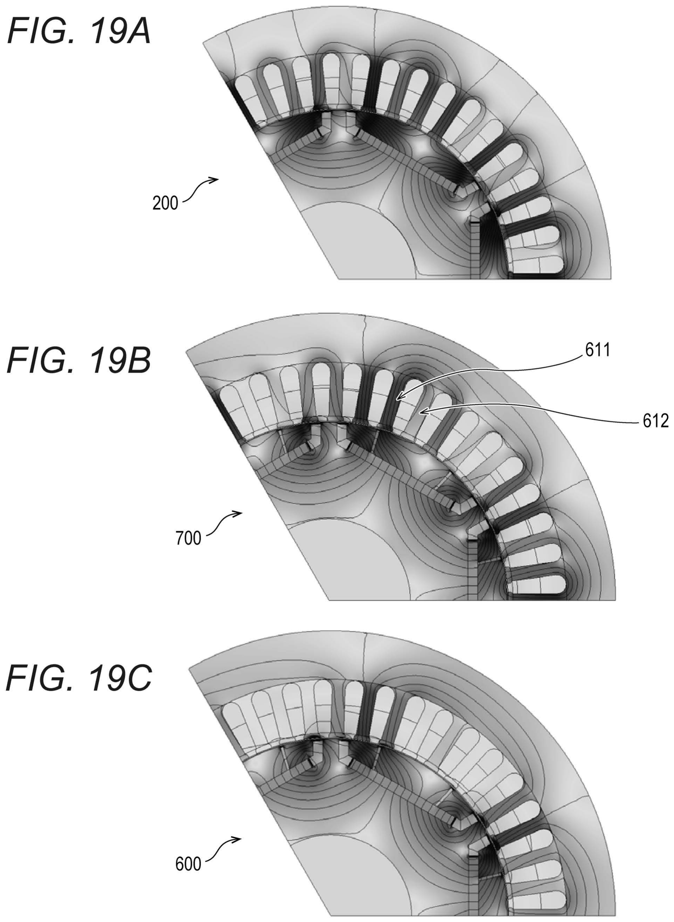

Fig. 19A is a diagram illustrating flux density distribution of the motor 200 of (a). Fig. 19B is a diagram illustrating flux density distribution of the motor 700 of (b). Fig. 19C is a diagram illustrating flux density distribution of the motor 600 of (c). In Figs. 19A to 19C, the darker color indicates a higher flux density distribution.

As can be seen from a comparison between Figs. 19A and 19B, the presence of the q-axis flux barrier 601 allows concentrating magnetic flux on the first tooth 611 that is desired to pass magnetic flux therethrough (the tooth that contributes to the torque in the positive direction) and reducing magnetic flux going to the second tooth 612 that is not desired to pass magnetic flux therethrough (the tooth that contributes to the torque in the negative direction). As can be seen from a comparison between Figs. 19B and 19C, the non-linear soft magnetic material can further reduce the flux density of the second tooth 612 that is not desired to pass magnetic flux therethrough. Consequently, it is possible to enhance the efficiency of the motor 600.

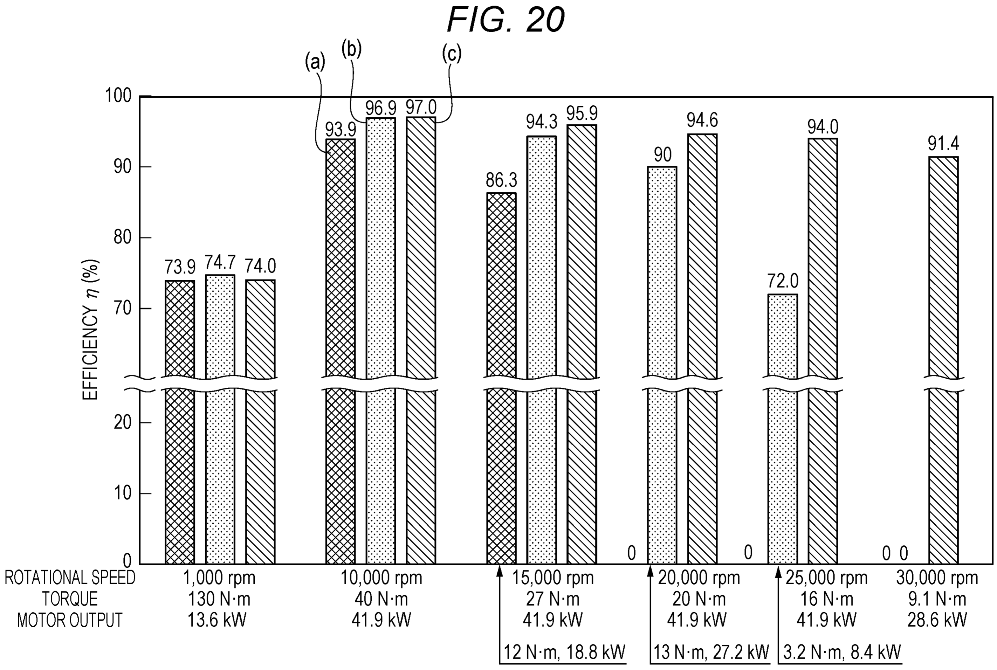

Fig. 20 is a diagram for a comparison of efficiency between the motor 200 of (a), the motor 700 of (b), and the motor 600 of (c). As illustrated in Fig. 20, the motor 600 of (c) obtains higher efficiency in the high-rotational speed region than the motor 200 of (a) and the motor 700 of (b).

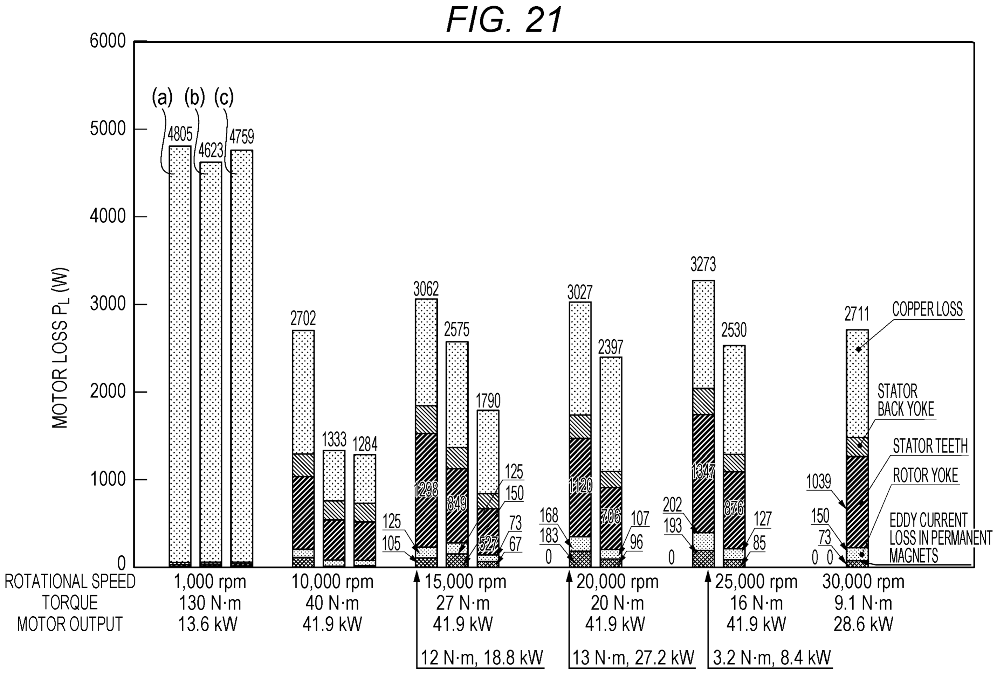

Fig. 21 is a diagram for a comparison of loss between the motor 200 of (a), the motor 700 of (b), and the motor 600 of (c). As illustrated in Fig. 21, the motor 700 of (b) and the motor 600 of (c) has lower loss in the stator teeth than the motor 200 of (a) since magnetic flux is concentrated on the first tooth 611 that is desired to pass magnetic flux therethrough (refer to Fig. 16B).

Moreover, as described below, the presence of the q-axis flux barriers 601 improves degaussing at the ends of the permanent magnets 23. Therefore, the motor 700 of (b) and the motor 600 of (c) have lower eddy current loss than the motor 200 of (a). Note that in Fig. 21, the motor 200 of (a) cannot operate at 15000 to 30000 rpm. Therefore, its loss is assumed and presented as zero. Similarly, the motor 700 of (b) cannot operate at 30000 rpm. Therefore, its loss is assumed and presented as 0.

Return to Figs. 16A and 16B. In the examples illustrated in Figs. 16A and 16B, the non-magnetic portions 25 extending in the circumferential direction are provided at two end portions in the circumferential direction of each of the permanent magnets 23, respectively. The non-magnetic portions 25 extending in the circumferential direction at the two end portions in the circumferential direction of each of the permanent magnets 23 are referred to as first flux barriers 602.

As illustrated in Fig. 16A, without the q-axis flux barrier 601, the magnetic flux that has passed between the first flux barriers 602 of the rotor 20 enters the permanent magnet 23 from a radially inner surface thereof. The magnetic flux that has penetrated the permanent magnet 23 then moves toward the teeth 611 and 612. The magnetic flux particularly passes through the end of the permanent magnet 23, too.

However, as illustrated in Fig. 16B, with the q-axis flux barrier 601, magnetic flux does not enter an area between the first flux barrier 602 and the q-axis flux barrier 601. As a result, the magnetic flux penetrates a center area of the permanent magnet 23 and bypasses the end of the permanent magnet 23. Hence, degaussing at the end of the permanent magnet 23 improves. For example, if the flux density at the end of the permanent magnet 23 in the motor 200 of (a) is 2 [T], the flux density reduces to approximately 1.8 [T] in the motor 700 of (b), and to approximately 1.7 [T] in the motor 600 of (c) on the same condition. Similarly, if the magnitude of the magnetic field at the end of the permanent magnet 23 in the motor 200 of (a) is 500 [kA/m], the magnitude of the magnetic field improves to approximately 450 [kA/m] in the motor 700 of (b) and to approximately 420 [kA/m] in the motor 600 of (c) on the same condition.

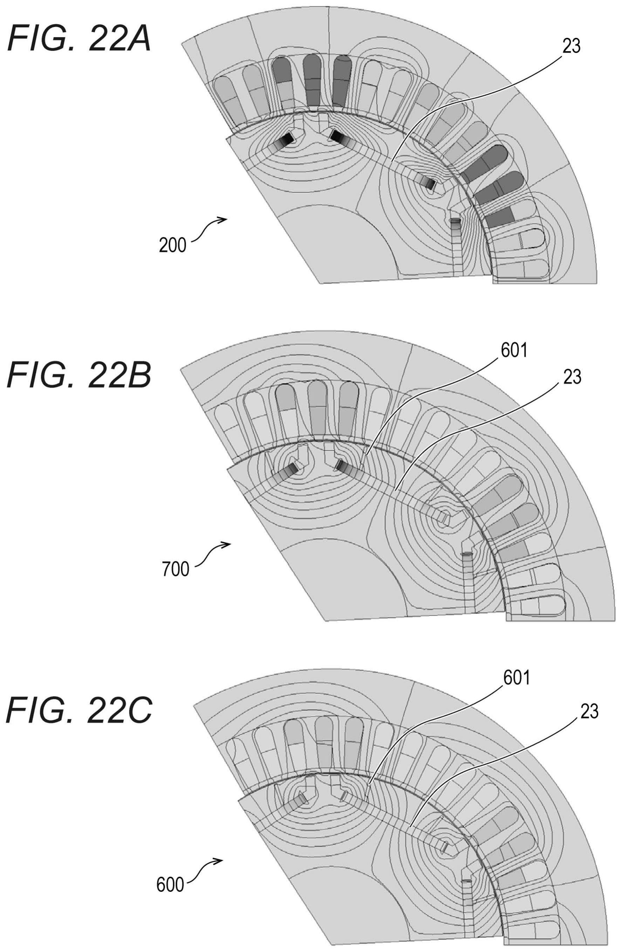

Fig. 22A is a diagram illustrating eddy current loss in the motor 200 of (a). Fig. 22B is a diagram illustrating eddy current loss in the motor 700 of (b). Fig. 22C is a diagram illustrating eddy current loss in the motor 600 of (c). As can be seen from a comparison between Figs. 22A and 22B, flux linkage is decreased by the q-axis flux barriers 601 at the ends of the permanent magnet 23 to reduce eddy current loss. As can be seen from a comparison between Figs. 22B and 22C, eddy current loss reduced by the decrease in flux linkage by the q-axis flux barriers 601 reduces further at the ends of the permanent magnet 23 due to the non-linear soft magnetic material.

In this manner, the motors 700 and 600 including the q-axis flux barriers 601 have high maximum torque in a wide rotational speed region (Fig. 17), high efficiency (Fig. 20), and also low loss (Fig. 21). Moreover, these characteristics: maximum torque, efficiency, and loss are further improved by at least a part of the stator 10 includes the non-linear soft magnetic material.

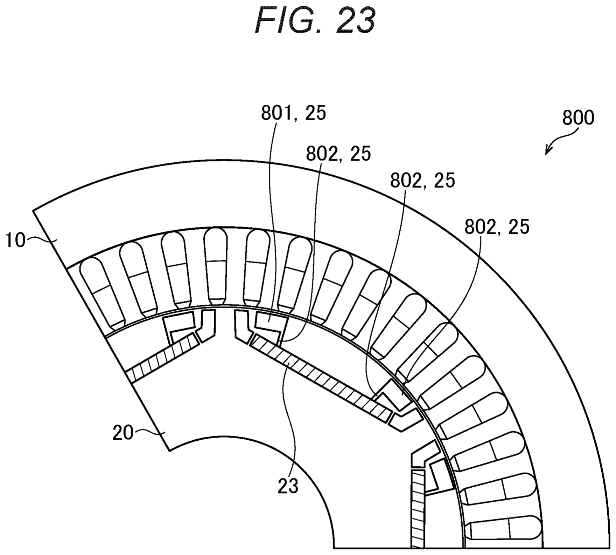

Fig. 23 is a diagram illustrating a motor 800 according to a fourth embodiment of the present disclosure. As illustrated in Fig. 23, d-axis flux barriers 801 extending in the d-axis direction and q-axis flux barriers 802 extending in the q-axis direction may be provided as the non-magnetic portions 25 near two end portions of each of the permanent magnets 23. Each of the d-axis flux barriers 801 and its respective q-axis flux barrier 802 may be provided in such a manner as to be continuous with each other. In the illustrated example, the q-axis flux barriers 802 are provided at the two end portions of each of the permanent magnets 23, respectively, and the d-axis flux barriers 801 extend in a direction away from their respective q-axis flux barriers 802. Such a configuration also enhances various motor characteristics as described above.

For example, the motor 800 including both of the d-axis flux barriers 801 and the q-axis flux barriers 802 surpasses a motor provided with only the d-axis flux barriers 801 and a motor provided with only the q-axis flux barriers 802 in maximum torque and efficiency in a wide rotational speed region. At least a part of the stator 10 of the motor 800 according to the fourth embodiment of the present disclosure may also include the non-linear soft magnetic material.

Up to this point the embodiments according to the present disclosure have been described. However, it is needless to say that the technical scope of the present disclosure should not be construed in a limited manner by the detailed description. The above-described embodiments are mere exemplifications. Those skilled in the art understand that the above-described embodiments can be modified in various manners within the scope of the disclosure of the claims. The technical scope of the present disclosure should be determined on the basis of the scope of the disclosure of the claims and the scope of equivalents thereof.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A motor comprising:
a stator including a stator core having a tooth, and a winding wound around the tooth; and
a rotor including a permanent magnet, wherein
at least a part of a portion, in which the permanent magnet embedded in the rotor faces the stator, of the rotor is provided with a non-magnetic portion.

2. The motor according to claim 1, wherein at least a part of the stator includes a non-linear soft magnetic material.

3. The motor according to claim 1, wherein the non-magnetic portion is provided in such a manner as to obstruct magnetic flux on a d-axis from acting on the permanent magnet.

4. The motor according to claim 1, wherein the non-magnetic portion is provided in such a manner as to be asymmetrical about a d-axis.

5. The motor according to claim 1, wherein
the rotor includes a plurality of core pieces, and
the plurality of core pieces is laminated in such a manner that the non-magnetic portions provided to the core pieces that are adjacent are displaced from each other.

6. The motor according to claim 1, wherein
the rotor includes a plurality of core pieces, and
the plurality of core pieces is laminated in such a manner that positions of the non-magnetic portions provided to the core pieces that are adjacent are symmetrical about a d-axis.

7. The motor according to claim 1, wherein the non-magnetic portion is provided in such a manner as to extend in a q-axis direction.

8. The motor according to claim 2, wherein the non-magnetic portion is provided in such a manner as to extend in a q-axis direction.

9. The motor according to claim 1, wherein the non-magnetic portion includes a d-axis flux barrier extending in a d-axis direction, and a q-axis flux barrier extending in a q-axis direction.

10. The motor according to claim 2, wherein the non-magnetic portion includes a d-axis flux barrier extending in a d-axis direction, and a q-axis flux barrier extending in a q-axis direction.
